# EUROPEAN PATENT APPLICATION

(11) **EP 2 634 685 A1**
(43) Date of publication of application: **04.09.2013**
(21) Application number: 12183695.1
(22) Date of filing: 10.09.2012
(51) Int. Cl.: G06F 3/0488, H04N 21/41, H04N 21/436

(54) **Display control apparatus, display control method, electronic device, and control method for electronic device**

(30) Priority: 29.02.2012 JP 2012044479
(71) Applicant: Kabushiki Kaisha Toshiba, Tokyo 105-8001 (JP)
(72) Inventor: Kanda, Tomohiro, Tokyo, 105-8001 (JP)
(74) Representative: Henkel, Breuer & Partner

(57) **Abstract**

According to one embodiment, a control method for an electronic device (100) includes: encoding image data displayed on a first screen (101a) of a display (101); first transmitting the image data encoded; generating operation image data, displayed on a screen of another device, corresponding to data in response to an input operation performed on an operation module (102) provided on the first screen (101a) in an overlapping manner; and second transmitting the operation image data generated, wherein the generating includes generating first operation image data, indicative of an input operation at a second point later than a first point in time, displayed in a superposed manner on a first image displayed on the first screen (101a) at the first point, and second operation image data, indicative of an input operation at the second point, displayed in a superposed manner on a second image displayed on the first screen (101a) at the second point.

## Description

### FIELD

Embodiments described herein relate generally to a display control apparatus, a display control method, an electronic device, and a control method for an electronic device.

### BACKGROUND

Conventionally, there are some electronic devices known to be capable of displaying image data received from another apparatus via a wired or a wireless connection on their own display.

In this type of technology, when the other apparatus has a display and a touch panel overlaid on the display and when an image is switched on the other apparatus by the operation of a user and such performed on the touch panel, an image on the own apparatus is also switched in response to that. In such a situation, on the other apparatus, the user and such can recognize what operation is performed or was performed to the touch panel by the movement of a hand, a finger, a stylus, or the like. However, on the own apparatus, it is difficult for the user and such to recognize what operation is performed or was performed to the touch panel.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary explanatory diagram schematically illustrating an example of a system comprising a first apparatus and a second apparatus according to an embodiment;
FIG. 2 is an exemplary block diagram schematically illustrating an example of a configuration of the first apparatus in the embodiment;
FIG. 3 is an exemplary block diagram schematically illustrating an example of a configuration of the second apparatus according to a first embodiment;
FIG. 4 is an exemplary block diagram schematically illustrating an example of configurations of controllers of the first apparatus and the second apparatus in the first embodiment;
FIG. 5 is an exemplary flowchart illustrating an example of processes performed in the first apparatus and the second apparatus in the embodiment;
FIG. 6 is an exemplary schematic diagram illustrating an example of a temporal change of an image corresponding to points in time before an input operation is performed out of operation images displayed on a second screen in the embodiment;
FIG. 7 is an exemplary schematic diagram illustrating an example of temporal changes of an image in response to an input operation out of the operation images displayed on the second screen in the embodiment;
FIG. 8 is an exemplary schematic diagram illustrating another example of temporal changes of an image in response to an input operation out of the operation images displayed on the second screen in the embodiment;
FIG. 9 is an exemplary schematic diagram illustrating an example of a temporal change of an image corresponding to points in time after the input operation is performed out of the operation images displayed on the second screen in the embodiment;
FIG. 10 is an exemplary schematic diagram illustrating an example of temporal changes of an input operation performed to an input operation module overlaid on a first screen and of operation images displayed on the second screen in response to the input operation in the embodiment;
FIG. 11 is an exemplary schematic diagram illustrating an example of temporal changes of operation images displayed on the second screen in the embodiment;
FIG. 12 is an exemplary schematic diagram illustrating an example of temporal changes of images displayed on the first screen and those on the second screen in the embodiment;
FIG. 13 is an exemplary front view of the first apparatus illustrating an example of a state in which a screen image is displayed before an input operation on the input operation module is performed in the embodiment;
FIG. 14 is an exemplary front view of the second apparatus illustrating an example of a state in which a screen image corresponding to that in FIG. 13 is displayed and operation images corresponding to a point in time before an input operation to the input operation module of the first apparatus is performed are displayed in the embodiment;
FIG. 15 is an exemplary front view of the first apparatus illustrating an example of a state in which an input operation to the input operation module is started in the embodiment;
FIG. 16 is an exemplary front view of the second apparatus illustrating an example of a state in which a screen image corresponding to that in FIG. 15 is displayed and operation images corresponding to a point in time at which the input operation to the input operation module of the first apparatus is started are displayed in the embodiment;
FIG. 17 is an exemplary front view of the first apparatus illustrating an example of a state in which the input operation to the input operation module is finished in the embodiment;
FIG. 18 is an exemplary front view of the second apparatus illustrating an example of a state in which a screen image corresponding to that in FIG. 17 is displayed and operation images in response to the input operation performed to the input operation module of the first apparatus are displayed in the embodiment;
FIG. 19 is an exemplary front view of the first apparatus illustrating an example of a state in which a screen image is displayed after the input operation on the input operation module is performed in the embodiment;
FIG. 20 is an exemplary front view of the second apparatus illustrating an example of a state in which a screen image corresponding to that in FIG. 19 is displayed and operation images corresponding to a point in time after the input operation to the input operation module of the first apparatus is performed are displayed in the embodiment;
FIG. 21 is an exemplary block diagram schematically illustrating an example of configurations of controllers of a first apparatus and a second apparatus according to a second embodiment;
FIG. 22 is an exemplary flowchart illustrating an example of processes performed in the first apparatus and the second apparatus in the second embodiment;
FIG. 23 is an exemplary block diagram schematically illustrating an example of a configuration of a controller of a first apparatus according to a third embodiment; and
FIG. 24 is an exemplary flowchart illustrating an example of processes performed in the first apparatus and a second apparatus in the third embodiment.

### SUMMARY

To overcome the problems and achieve the object mentioned above, according to an embodiment, a display control apparatus comprises: a first receiver configured to receive encoded data for a screen image from a first transmitter of a first apparatus comprising a first display having a first screen, an encoder configured to encode the data for the screen image displayed on the first screen, the first transmitter configured to transmit the data for the screen image encoded by the encoder, an input operation module provided on the first screen in an overlapping manner, and a second transmitter configured to transmit data in response to an input operation performed on the input operation module; a decoder configured to decode the encoded data for the screen image received by the first receiver; a second receiver configured to receive the data in response to the input operation transmitted from the second transmitter; an image data generator configured to generate data for an operation image corresponding to the data in response to the input operation received by the second receiver; and a display controller configured to display an image containing the screen image and the operation image on a second screen of a second display from the decoded data for the screen image and the generated data for the operation image, wherein the display controller is configured to display an image containing a first screen image displayed on the first screen at a first point in time and a first operation image indicative of the input operation at a second point in time later than the first point in time and to subsequently display an image containing a second screen image displayed on the first screen at the second point in time and a second operation image indicative of an input operation at the second point in time.

According to another embodiment of the invention, a display control method implemented comprises: first receiving data for a screen image from a first transmitter of a first apparatus comprising a first display having a first screen, the first transmitter configured to transmit the data for the screen image displayed on the first screen, an input operation module provided on the first screen in an overlapping manner, and a second transmitter configured to transmit data in response to an input operation performed on the input operation module; second receiving the data in response to the input operation transmitted; generating data for an operation image corresponding to the data in response to the input operation received; and displaying an image containing a first screen image displayed on the first screen at a first point in time and a first operation image corresponding to the data in response to the input operation at a second point in time later than the first point in time and subsequently displaying an image containing a second screen image displayed on the first screen at the second point in time and a second operation image indicative of an input operation at the second point in time.

According to still another embodiment of the invention, an electronic device comprises: an encoder configured to encode data for a screen image displayed on a first screen of a first display; a first transmitter configured to transmit the data for the screen image encoded by the encoder; an image data generator configured to generate data for an operation image corresponding to data in response to an input operation performed on an input operation module provided on the first screen in an overlapping manner, the data for the operation image being displayed on a screen of another device; and a second transmitter configured to transmit the data for the operation image generated by the image data generator, wherein the image data generator is configured to generate data for a first operation image displayed in a superposed manner on a first screen image displayed on the first screen at a first point in time, the first operation image being indicative of an input operation at a second point in time later than the first point in time, and to generate data for a second operation image displayed in a superposed manner on a second screen image displayed on the first screen at the second point in time, the second operation image being indicative of an input operation at the second point in time.

According to still another embodiment of the invention, a control method for an electronic device, the control method comprises: encoding data for a screen image displayed on a first screen of a first display; first transmitting the data for the screen image encoded; generating data for an operation image corresponding to data in response to an input operation performed on an input operation module provided on the first screen in an overlapping manner, the data for the operation image being displayed on a screen of another device; and second transmitting the data for the operation image generated, wherein the generating includes generating data for a first operation image displayed in a superposed manner on a first screen image displayed on the first screen at a first point in time, the first operation image being indicative of an input operation at a second point in time later than the first point in time, and data for a second operation image displayed in a superposed manner on a second screen image displayed on the first screen at the second point in time, the second operation image being indicative of an input operation at the second point in time, as the data for the operation image.

### DETAILED DESCRIPTION

Various embodiments will be described hereinafter with reference to the accompanying drawings.

A plurality of exemplary embodiments and modifications in the followings include the same constituent elements. In the followings, the same constituent elements are given with common reference numerals, and their redundant explanations are omitted. In the present specification, ordinal numbers such as first and second are given for the sake of conveniently distinguishing constituent elements and others, and are not intended to mean sequence of processes, priority, importance, and such.

### First Embodiment

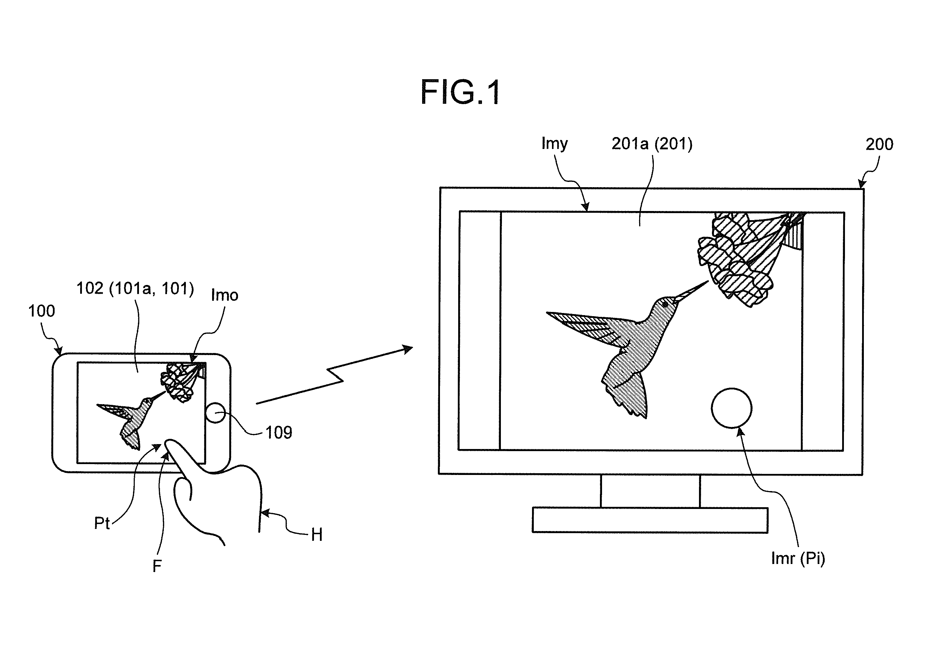

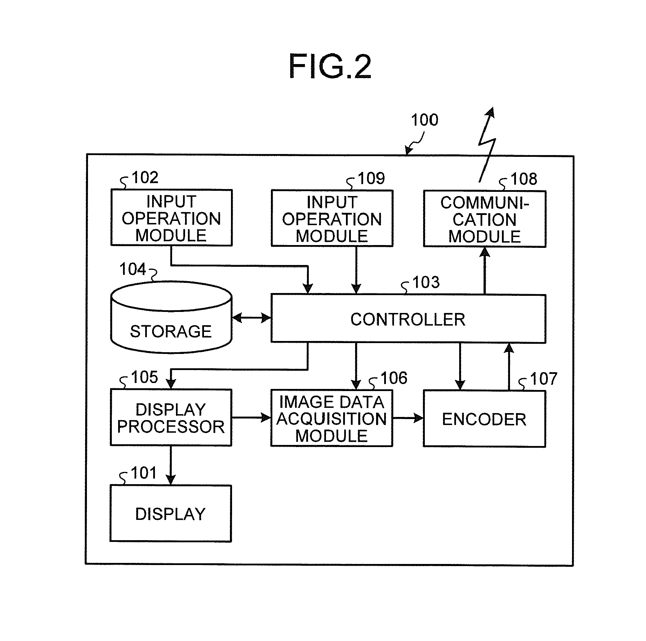

In a first embodiment, as one example, as illustrated in FIG. 1, a system comprises an electronic device 100 (a first apparatus) and a video display 200 (a second apparatus, a display control apparatus). The electronic device 100 comprises a display 101 (a display, a first display) having a screen 101a. The electronic device 100 further comprises an input operation module 102 provided in an overlapping manner on the screen 101a of the display 101, and an input operation module 109 provided out of the display 101. The display 101 is, for example, a liquid crystal display (LCD) or an organic electro-luminescent display (OELD). The input operation module 102 is, for example, a transparent touch panel (a touch pad, a touch sensor, an operating surface, an input receiving module), and the input operation module 109 is, for example, a click button (a push button) or a pointing device (a touch pad). The electronic device 100 is, for example, a smartphone, a cellular phone, a personal digital assistant (PDA), a personal computer, or a television receiver. The display 101 of the electronic device 100, a storage 104, and a communication module 108 (see FIG. 2) can be so-called external devices, not integral with a main unit having a controller 103 and others.

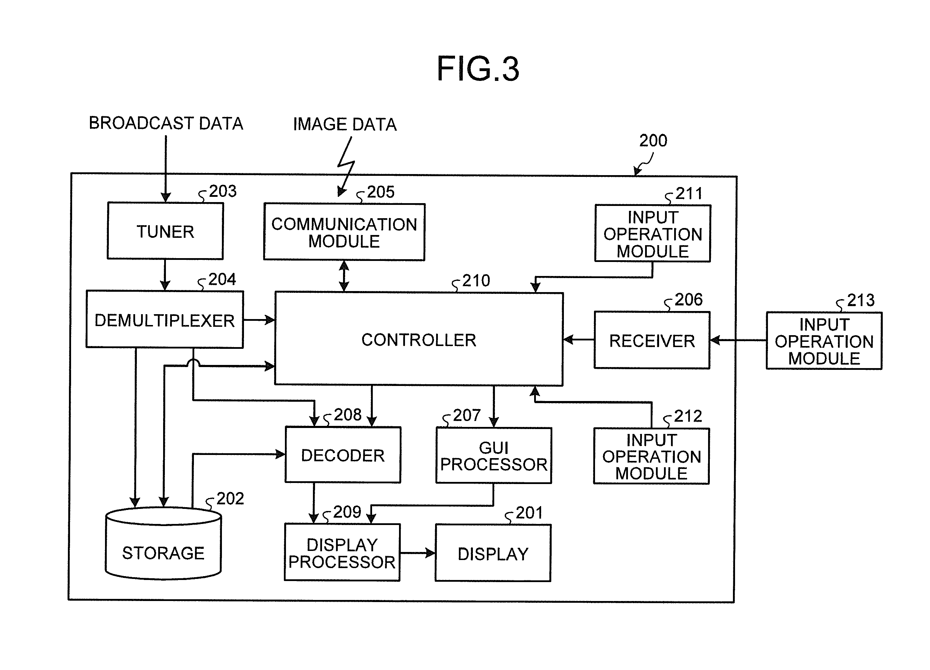

The video display 200 comprises a display 201 (a display, a second display) having a screen 201a. The display 201 is, for example, an LCD or an OELD. The video display 200 is, for example, a smartphone, a cellular phone, a PDA, a personal computer, a television receiver, or a display. The display 201 of the video display 200, a storage 202, and a communication module 205 (see FIG. 3) can be so-called external devices, not integral with a main unit having a controller 210 and others. On the screen 201a of the display 201, a touch panel may be provided.

On the screen 201a of the video display 200, an image Imy (a screen image) corresponding to (the same as) an image Imo (a screen image) displayed on the screen 101a of the electronic device 100 is displayed. Furthermore, on the screen 201a of the video display 200, an image Imr (an operation image) in response to an input operation performed on the input operation module 102 of the electronic device 100 is displayed. An image in response to the input operation is not normally displayed on the screen 101a of the electronic device 100. Therefore, in the first embodiment, as one example, at a position Pi on the screen 201a corresponding to a position Pt on the screen 101a detected by the input operation module 102, the image Imr generated is displayed. The input operation module 102 detects an operation position (a contact position, a proximity position, and such) by a hand H, a finger F, a stylus, a touch pen, and others. The data for the image Imo in the electronic device 100 (data for a screen image) and the underlying data for the image Imr in the video display 200 (data in response to an input operation performed on the input operation module 102) are transmitted from the electronic device 100 to the video display 200 via a wired or a wireless communication system (a communication device, a transmitter, a repeater, a receiver, wiring, and others). It can be said that the electronic device 100 is source equipment (a source device) and the video display 200 is sink equipment (a sink device). While a wireless local area network (LAN) and such is used as a method of transferring data, as one example, it is not restricted to this.

In the first embodiment, as one example, as illustrated in FIG. 2, the electronic device 100 comprises the display 101, the input operation module 102, the controller 103, the storage 104, a display processor 105, an image data acquisition module 106, an encoder 107, the communication module 108, the input operation module 109, and others.

Each of processes performed by the controller 103 of the electronic device 100 is realized, as one example, by the operation of a program (such as an application) that is stored in a storage (for example, a hard disk drive (HDD)) of a computer and is read out and executed by an arithmetic processor (for example, a central processing unit (CPU)) of the computer. Furthermore, the controller 103 can perform processes in accordance with a program (application, script, or the like) included in the data received by the communication module 108 and others. The storage 104 stores therein data concerning various processes in the electronic device 100, and is, as one example, an HDD.

The display processor 105 is controlled by the controller 103 and performs a process of displaying the image Imo (a screen image, see FIG. 1) on the screen 101a of the display 101. The image Imo displayed on the screen 101a may be anything, for example, movie content, an image for a user interface, or a still image, as long as it is an image (video) output by the use of the electronic device 100. The image data acquisition module 106 is controlled by the controller 103 and acquires (samples) data for an image displayed on the screen 101a from the display processor 105 at a given timing (a sampling interval). The encoder 107 encodes the data for the image (video) acquired by the image data acquisition module 106 in a given method (as one example, H.264/MPEG-4 AVC). The controller 103 controls the communication module 108 to transmit the data for the image Imo displayed on the screen 101a (data for a screen image, encoded data as one example). In other words, in the first embodiment, the communication module 108 is an example of a first transmitter.

In the input operation module 102, an operation position on the screen 101a is detected. The controller 103 controls the communication module 108 to transmit data in response to the input operation performed on the input operation module 102 (for example, data indicative of an operation position (a position on a two dimensional coordinate corresponding to the screen 101a) and image data generated from the data indicative of the operation position) at a given timing (intervals). In other words, in the first embodiment, the communication module 108 is also an example of a second transmitter. The first transmitter that transmits data for a screen image and the second transmitter that transmits data in response to an input operation can be configured separately.

In the first embodiment, as one example, as illustrated in FIG. 3, the video display 200 comprises the display 201, the storage 202, a tuner 203, a demultiplexer 204, the communication module 205, a receiver 206, a GUI processor 207, a decoder 208, a display processor 209, the controller 210, input operation modules 211, 212, and 213, and others. The storage 202 is, as one example, an HDD.

The tuner 203 is a receiving module for broadcast data (a broadcast signal, broadcast waves). The demultiplexer 204 is a separating module that separates various types of data from the broadcast data received. The video data separated from the broadcast data is sent to the decoder 208. The data separated from the broadcast data and the data acquired via the communication module 205 are sent to the storage 202 and stored therein. The decoder 208 decodes the data received from the demultiplexer 204, the data received from the storage 202, or the data received from the communication module 205. The decoded data is sent to the display processor 209. The communication module 205 performs exchanging of data with other devices (for example, the electronic device 100 and a repeater (not depicted)).

The communication module 205 receives the data for the image Imo displayed on the screen 101a (data for a screen image) transmitted from the communication module 108 of the electronic device 100. In other words, in the first embodiment, the communication module 205 is an example of a first receiver. The communication module 205 further receives the data in response to an input operation performed on the input operation module 102 transmitted from the communication module 108 of the electronic device 100. In other words, in the first embodiment, the communication module 205 is also an example of a second receiver. The first receiver that receives the data for a screen image and the second receiver that receives the data in response to an input operation can be configured separately.

Each of processes performed by the controller 210 of the video display 200 is realized, as one example, by the operation of a computer program (such as an application) that is stored in a storage (for example, an HDD) of a computer and is read out and executed by an arithmetic processor (for example, a CPU) of the computer. Furthermore, the controller 210 can perform processes in accordance with a program (application, script, or the like) included in the data received by the tuner 203, the communication module 205, and others.

The controller 210 can include a web browser having a JavaScript (registered trademark) processor, an HTML processor, a video/audio element processor, an application program interface (API) processor, a CSS processor, and others (none depicted). The GUI processor 207 generates an image for a user interface by instructions of the controller 210. The display processor 209 combines the data received from the decoder 208 and the data received from the GUI processor 207. The data combined in the display processor 209 is displayed on the screen 201a of the display 201.

The controller 210 further receives a control signal from the input operation module 213 such as a remote controller by wireless communication (as one example, infrared communication) via the receiver 206. The controller 210 further receives control signals from the input operation module 211 built in the video display 200 (for example, touch sensors and switches) and the external input operation module 212 (for example, a mouse and a keyboard) . The controller 210 can perform various arithmetic processes and control the respective modules in response to the control signals received from the input operation modules 211 to 213.

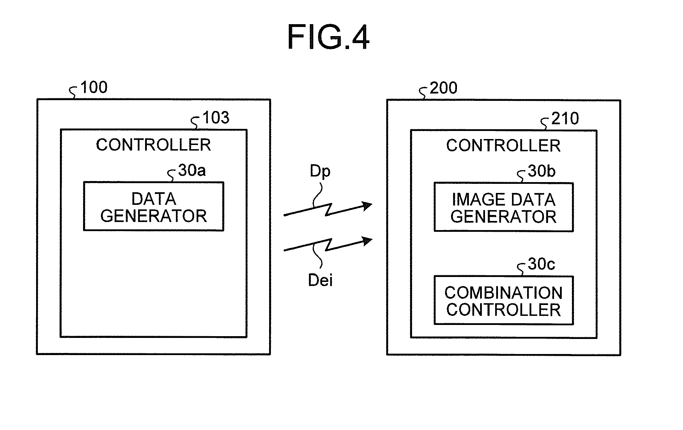

In the first embodiment, as one example, as illustrated in FIG. 4, transmitted from the electronic device 100 to the video display 200 are encoded data Dei (data for a screen image) for the image Imo displayed on the screen 101a and data Dp (input operation data) indicative of a detected position (an operation position) in response to an input operation performed on the input operation module 102. In other words, the controller 103 of the electronic device 100 serves as a data generator 30a (a data generator) that generates the data Dp in response to an input operation performed on the input operation module 102 from a detection result (an operation result) in the input operation module 102. Furthermore, the controller 210 of the video display 200 serves as an image data generator 30b that generates data for images (operation images, images Imr, and others) corresponding to the data Dp in response to an input operation and displayed on the screen 201a based on the data Dp received from the electronic device 100. The controller 210 further serves as a combination controller 30c to combine the data for images in response to an input operation performed on the input operation module 102 (operation images) and the data for the image Imo displayed on the screen 101a (a screen image).

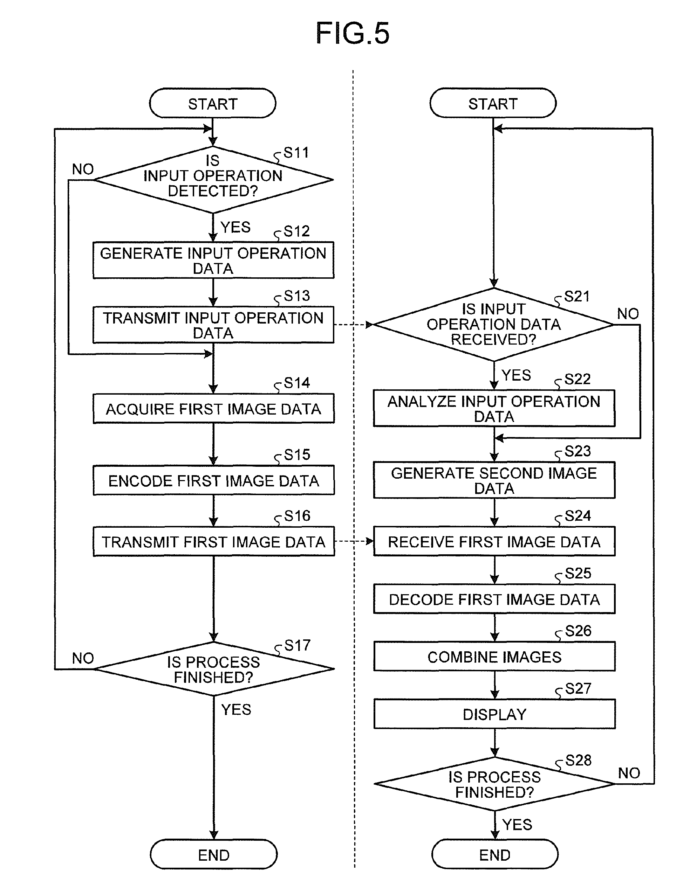

In the first embodiment, as one example, the electronic device 100 and the video display 200 operate in accordance with a flowchart illustrated in FIG. 5. On the left side in FIG. 5, an example of the operation of the electronic device 100 is illustrated, and on the right side in FIG. 5, an example of the operation of the video display 200 is illustrated.

In the electronic device 100, when an input operation is detected in the input operation module 102 (Yes at S11), the controller 103 serves as the data generator 30a and generates input operation data in response to the input operation (S12). At S12, when there are a plurality of detected locations (operated locations) present, the input operation data is generated as the data representing the positions of the detected locations. In the input operation data, the data representing the timing (clock time, time) at which the input operation is detected (or the data for a corresponding screen image is displayed) can be included. The controller 103 controls the communication module 108, and the communication module 108 transmits the input operation data Dp (data in response to an input operation, see FIG. 4) (S13). In the first embodiment, as one example, the input operation data is transmitted without being encoded. Accordingly, as one example, the input operation data can be transmitted more quickly.

In the electronic device 100, regardless of the detection of input operation data, as one example, image data is acquired in parallel with the processes concerning the detection and the transmission of input operation data. More specifically, the controller 103 controls the display processor 105, the image data acquisition module 106, and others to acquire the data for an image (video) displayed on the screen 101a of the electronic device 100 (data for a screen image) (S14). The controller 103 then controls the encoder 107, and the encoder 107 encodes the image data acquired (S15). The controller 103 then controls the communication module 108, and the communication module 108 transmits the encoded image data Dei (encoded data for a screen image, see FIG. 4) (S16). When the process of transferring the image (video) is not finished (No at S17), the procedure returns to S11.

Meanwhile, in the video display 200, when the input operation data Dp is received by the communication module 205 (Yes at S21), the controller 210 analyzes the input operation data received (S22). The controller 210 serves as the image data generator 30b and generates image data (data for operation images) in response to the input operation data received up to the present (S23). Even when it is No at S21, the generation of image data at S23 is carried out. This is because, even when the input operation data Dp is not received at S21, there may be a case where the image data in response to the input operation data received up to the present is generated, for example, when generating a trace and such. An example of an image displayed on the screen 201a of the display 201 by such a process at S23 will be described later.

In addition, in the video display 200, regardless of receiving input operation data, as one example, the screen image data Dei is received in parallel with the processes of receiving the input operation data and generating the image data in response to the input operation (S24). The controller 210 then controls the decoder 208, and the decoder 208 decodes the screen image data Dei received (S25). The controller 210 then controls the display processor 209 as the combination controller 30c to generate image data in which the image data decoded at S25 (data for a screen image) and the image data generated at S23 (data for an operation image) are combined (S26). At S26, the data for an operation image generated is combined with the data for the corresponding screen image. Specifically, for example, when the data in response to an input operation contains the data representing the timing (clock time, time) at which time the input operation is detected (or the data for the corresponding screen image is displayed), or when at least one of the data in response to the input operation or the data for the screen image contains the data representing synchronization timing or clock time, it is easier for the controller 210 to make the screen image data and the operation image data synchronize based on such data. Moreover, when a delay time that is the time from the image Imo is displayed on the electronic device 100 until the image Imy corresponding to (the same as) the image Imo is displayed on the video display 200 is known by a prior test (calibration) and such, it is easier for the controller 210 to make the screen image data and the operation image data synchronize based on the data of the delay time.

The controller 210 then controls the display processor 209, and the display processor 209 controls the display 201 to display the image combined with the screen image and the operation image on the screen 201a (see FIG. 1) (S27). In the first embodiment, as one example, the controller 210, the GUI processor 207, the display processor 209, and others are an example of a display controller. In the first embodiment, as one example, at least a part of the processes in the input operation module 102 from the detection of an input operation to the generation of an operation image and a part of the processes of screen image data being acquired, encoded, transmitted, received, decoded, and combined are performed in parallel.

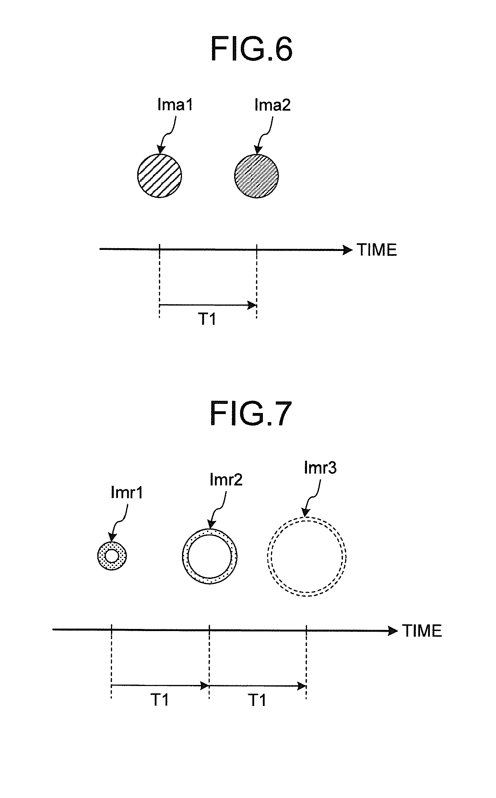

Next, with reference to FIGS. 6 to 9, examples of operation images (Ima1, Ima2, Imr1, Imr2, Imr3, Imp1, Imp2) on the screen 201a of the video display 200 in the first embodiment will be described. In FIG. 6, illustrated is an example of operation images Ima1 and Ima2 displayed at points in time before an input operation is performed. More specifically, from a point in time an input operation performed to the input operation module 102 is detected while the screen image Imo is displayed on the electronic device 100 until the screen image Imy corresponding to the screen image Imo is displayed on the screen 201a of the video display 200, it takes time (a delay time) due to transmitting and receiving of screen image data from the electronic device 100 to the video display 200, processes performed in the respective devices, encoding and decoding of the screen image data, and such. Therefore, the operation images Ima1 and Ima2 generated from the data corresponding to the position of the input operation at a point in time the input operation is detected (for example, a point in time the detection is started) can be combined with the screen image Imy at a point in time before the input operation is detected. Furthermore, in the example in FIG. 6, the operation images Ima1 and Ima2 at points in time before the input operation is performed become darker as the time passes and comes closer to the point in time the input operation is started. Such operation images Ima1 and Ima2 can give an effect like a shadow that darkens in color as a finger F and such comes closer to the input operation module 102. In FIGS. 6 to 9, a symbol T1 represents a time interval at which the operation images are updated (or displayed) on the screen 201a, and is 100 milliseconds as one example.

In FIG. 7, illustrated is an example of operation images Imr1, Imr2, and Imr3 corresponding to an input operation when the finger F of the user (see FIG. 1) and such is in contact with the input operation module 102 (when not moving, when a tap is performed) . In this example, when the position where the finger F and such is in contact with the input operation module 102 is not changed, the operation image Imr1 changes through the more expanded operation image Imr2 to the further expanded operation image Imr3. Such operation images Imr1, Imr2, and Imr3 can give an effect like a ripple that spreads on a liquid surface.

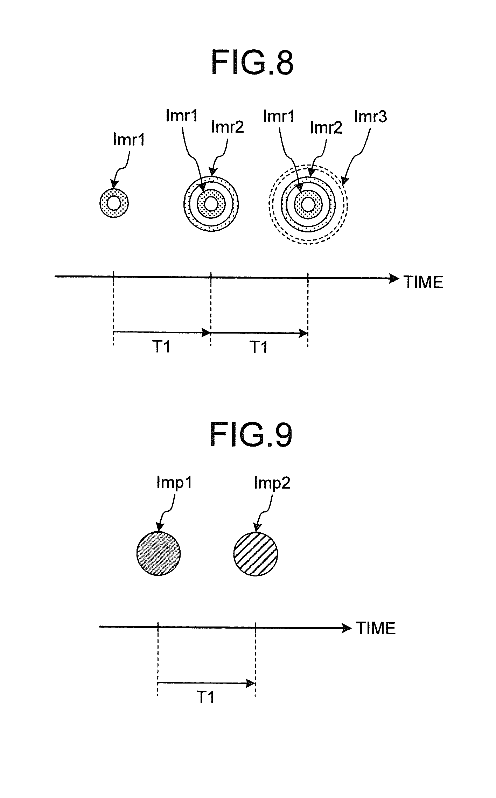

In FIG. 8, illustrated is another example of the operation images Imr1, Imr2, and Imr3 corresponding to an input operation when the finger F of the user (see FIG. 1) and such is in contact with the input operation module 102 (when not moving, when a tap-and-hold is performed). In this example, when the position where the finger F and such is in contact with the input operation module 102 is not changed, the operation image Imr1 changes through the more expanded operation image Imr2 to the further expanded operation image Imr3. In addition, new images such as Imr1 and Imr2 emerge as time passes. Such operation images Imr1, Imr2, and Imr3 can give an effect like ripples that spread on a liquid surface.

In FIG. 9, illustrated is an example of operation images Imp1 and Imp2 displayed at points in time after the input operation is performed. In this example, even after the finger F and such is moved away from the input operation module 102, the operation images Imp1 and Imp2 are displayed for a while as an after-image. The operation images Imp1 and Imp2 are displayed at the position where the finger F and such is last in contact with the input operation module 102. The operation images Imp1 and Imp2 are light-colored as the time passes from the point in time the input operation is finished. Such operation images Imp1 and Imp2 can give an effect like a shadow that lightens in color as the finger F and such moves away from the input operation module 102. The operation images illustrated in FIGS. 6 to 9 (Ima1, Ima2, Imr1, Imr2, Imr3, Imp1, Imp2) can be generated, as one example, based on a shape database (data) stored in a storage (in the first embodiment, as one example, the storage 202). The shape database stores therein the data indicative of display forms (such as position, size, shape, color, density, brightness, and design) of the operation images (Ima1, Ima2, Imr1, Imr2, Imr3, Imp1, Imp2) linked to the data such as types of operation images (before the time of input operation, at the time of input operation, after the time of input operation) and elapsed time. The image data generator 30b refers to the shape database to acquire the data for the operation images (Ima1, Ima2, Imr1, Imr2, Imr3, Imp1, Imp2).

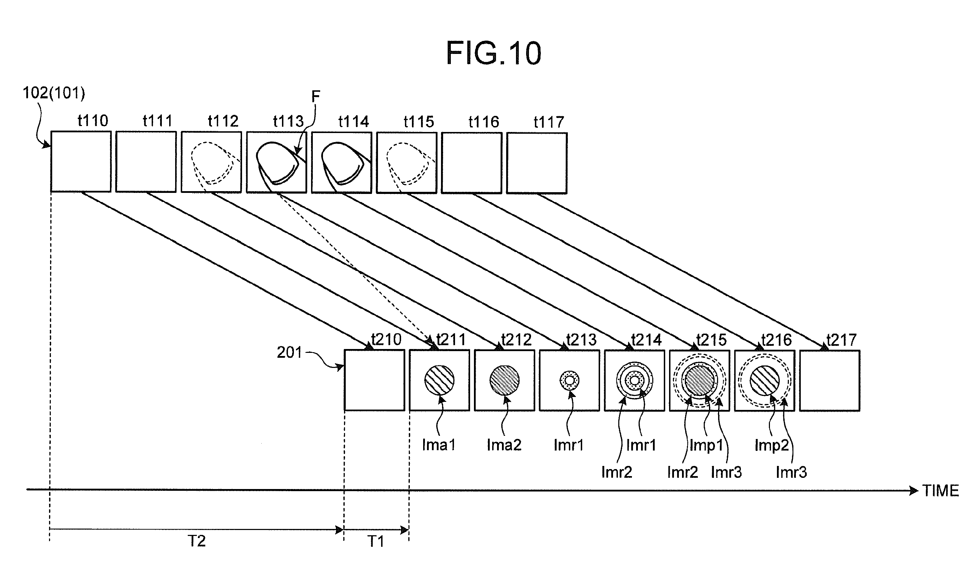

In FIG. 10, illustrated is an example of temporal changes in the state of the display 101 (in planar view) and those of operation images (Ima1, Ima2, Imr1, Imr2, Imr3, Imp1, Imp2) on the display 201 of the video display 200 when the finger F is in contact with a fixed point on the display 101 of the electronic device 100. Each of frames in FIG. 10 represents a part of the display 101 and that of the display 201 sampled at a constant time interval T1, and clock time (timing) t110 to t117 correspond to clock time (timing) t210 to t217, respectively. In this example, from the time the screen image Imo is displayed on the display 101 or from the time an input operation by the finger F and such corresponding to the screen image Imo is detected in the input operation module 102 until the time the screen image Imy corresponding to the screen image Imo is displayed on the display 201, it takes time T2 (a delay time). The finger F is in contact with the input operation module 102 and performs an input operation at least between the clock time t113 and the clock time t114, and on the display 201, the operation images Imr1, Imr2, and Imr3 corresponding to the input operation are displayed between the clock time t213 and t214 corresponding to the clock time t113 and t114, respectively. At the clock time t111 and t112 prior to that, even though the finger F is not yet in contact with the input operation module 102, the operation images Ima1 and Ima2 at points in time before the input operation is performed are displayed on the display 201 at the clock time t211 and t212 corresponding to the clock time t111 and t112, respectively. From FIG. 10, it can tell that the clock time t211 and t212 at which the operation images Ima1 and Ima2 are displayed, respectively, are later than the clock time t113 and t114 at which the input operation is performed (detected). More specifically, from FIG. 10, it should be appreciated that the operation images Ima1 and Ima2 at points in time before the input operation is performed are virtually generated leveraging the delay time T2.

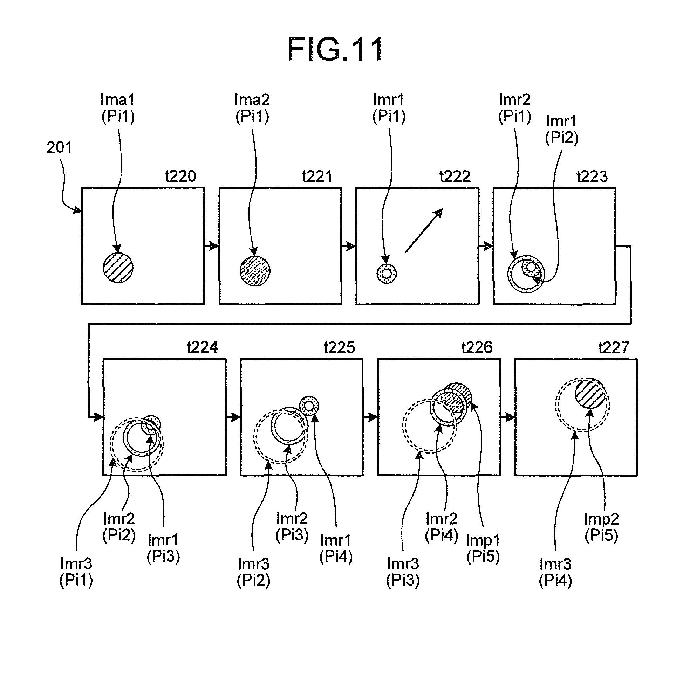

In FIG. 11, illustrated is an example of temporal changes of operation images (Ima1, Ima2, Imr1, Imr2, Imr3, Imp1, Imp2) when the finger F and such is moved in contact with the input operation module 102 corresponding to the display 101 of the electronic device 100. The operation images (Ima1, Ima2, Imr1, Imr2, Imr3, Imp1, Imp2) illustrated in FIG. 11 are images corresponding to a trace of an input operation performed on the input operation module 102. Each of frames in FIG. 11 represents a part of the display 201 sampled at the constant time interval T1, and clock time (timing) t220 to t227 indicate respective clock time sampled at a constant time interval. In FIG. 11, illustrated is a situation of the finger F in contact with the display 101 (input operation module 102) being moved (swiped, slid) from the lower left to the upper right. In the example in FIG. 11, on the display 201, the operation images Imr1 to Imr3 corresponding to the input operation performed on the input operation module 102 are displayed between the clock time t222 and t225. However, as the contact position (position of input operation) on the input operation module 102 changes, the display positions of the operation images Imr1 to Imr3 change from a position Pi1 to a position Pi4. The operation images Imr1 to Imr3 further change the form thereof in response to the elapsed time from the displayed time while changing the position from the position Pi1 to the position Pi4. More specifically, the operation image Imr1 emerged at the position Pi1 at the clock time t222 changes into the operation images Imr2 and Imr3 that become light-colored and become larger as the clock time t223 and t224 elapse. The operation image Imr1 emerged at the position Pi2 at clock time t223 changes into the operation images Imr2 and Imr3 that become light-colored and become larger as the clock time t224 and t225 elapse. The operation image Imr1 emerged at the position Pi3 at clock time t224 changes into the operation images Imr2 and Imr3 that become light-colored and become larger as the clock time t225 and t226 elapse. The operation image Imr1 emerged at the position Pi4 at clock time t225 changes into the operation images Imr2 and Imr3 that become light-colored and become larger as the clock time t226 and t227 elapse. In the example in FIG. 11, at the clock time t220 and t221, the operation images Ima1 and Ima2 at points in time before the input operation is performed are also displayed. The positions of the images Ima1 and Ima2 are set at the position Pi1 corresponding to the position where the input operation is started on the input operation module 102. Furthermore, at the clock time t226 and t227, the operation images Imp1 and Imp2 at points in time after the input operation is performed are displayed. The positions of the images Imp1 and Imp2 are set at the position Pi5 corresponding to the position where the input operation performed on the input operation module 102 is finished. Accordingly, the positions of the operation images Ima1, Ima2, Imp1, and Imp2 that correspond to points in time before and after the input operation is performed can be determined (set) based on the positions of the input operation performed.

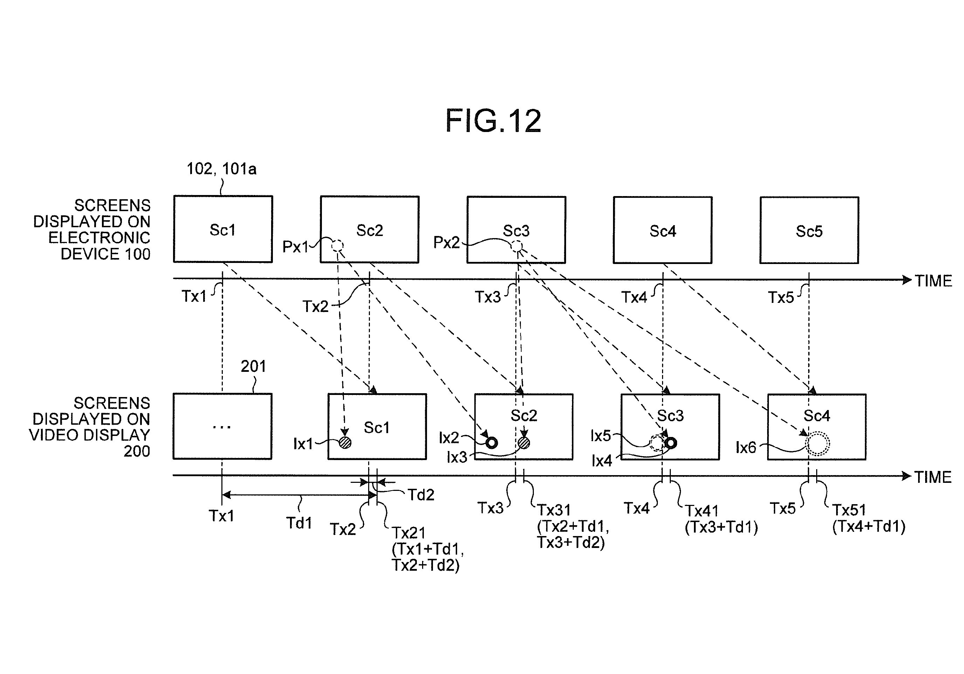

FIG. 12 is a diagram illustrating an example of screens displayed on the electronic device 100 and on the video display 200. On the screen 101a of the electronic device 100, displayed are a screen Sc0 at time Tx1, a screen Sc2 at time Tx2, a screen Sc3 at time Tx3, a screen Sc4 at time Tx4, and a screen Sc5 at time Tx5. In the input operation module 102 of the electronic device 100, an input operation (for example, a finger and such is contacting, depressing, or approaching the input operation module 102) is not detected at the time Tx1, an input operation at a position Px1 is detected at the time Tx2, the movement of the input operation to the position Px2 is detected in the time between the time Tx2 and the time Tx3, and the input operation is not detected at the time Tx4 and the time Tx5. More specifically, the input operation module 102 of the electronic device 100 detects that the input operation is started at the time Tx2 and detects that the input operation is finished at the time Tx3.

The video display 200 here displays the screen Sc1, which was displayed on the electronic device 100 at the time Tx1, at time Tx21 that is when a video delay time Td1 elapsed from the time Tx1. The video delay time Td1 includes, as in the foregoing, for example, the time for the electronic device 100 to encode the screen Sc1, the time until the electronic device 100 transmits the encoded screen Sc1, the time for the video display 200 to receive the data for the screen Sc1 transmitted, and the time until the video display 200 decodes and displays the screen Sc1 received. The video display 200 displays an image Ix1 (an operation image) corresponding to the position Px1 of the input operation, which is detected by the input operation module 102 at the time Tx2, at the time Tx21 that is when a pointer delay time Td2 (the time required from an input operation is detected by the electronic device 100 until a corresponding image is displayed on the video display 200) elapsed from the time Tx2. While the image Ix1 corresponds to the operation performed to the screen Sc2, the electronic device 100 displays the screen Sc1 at the time Tx21. Accordingly, the electronic device 100 displays the image Ix1 as in a display form of, for example, a shadow.

The video display 200 then displays the screen Sc2, which was displayed on the electronic device 100 at the time Tx2, at time Tx31 that is when the video delay time Td1 elapsed from the time Tx2. At the time Tx31, the video display 200 displays an image Ix2 (an operation image) corresponding to the position Px1 of the input operation detected by the input operation module 102 at the time Tx2 together with the screen Sc2.

To put the foregoing processes in FIG. 12 in different words, when an input operation at the position Px1 on the screen Sc2 is started while the electronic device 100 is displaying the screen Sc2, the video display 200 displays the screen Sc1, which was displayed on the electronic device 100 at the time Tx1 that is earlier than the time Tx2 at which time the screen Sc2 is displayed, together with the image Ix1 corresponding to the position Px1. The video display 200 then displays the screen Sc2 and the image Ix2 at the time Tx31 that is the time after the screen Sc1 and the image Ix1 are displayed. The image Ix2 is displayed at the position corresponding to the position Px1 of the input operation detected by the electronic device 100 while the screen Sc2 is displayed on the electronic device 100. More specifically, the image Ix2 is displayed at the same position as the image Ix1. The display form of the image Ix1 and that of the image Ix2 may be different from each other.

At the time Tx31, the video display 200 may further display an image Ix3 (an operation image). The image Ix3 here corresponds to a position Px2 of the input operation detected by the electronic device 100 at the time Tx3. More specifically, the video display 200 may display the image Ix2 corresponding to the position Px1 (such as a contact position), which is detected by the electronic device 100 while the electronic device 100 is displaying the screen Sc2, and the image Ix3 corresponding to the position Px2 (such as a contact position), which is detected by the electronic device 100 while the electronic device 100 is displaying the screen Sc3, being superposed on the screen Sc2. At this time, the image Ix2 and the image Ix3 are different from each other in display form. Both the image Ix1 displayed on the screen Sc0 and the image Ix3 displayed on the screen Sc3 are images that pre-announce an operation position on a future displayed screen. Accordingly, the display form of the image Ix1 and that of the image Ix3 may be the same.

Furthermore, while the video display 200 is displaying the screen Sc2, the video display 200 may display the image Ix2 and an image indicative of the moving direction of the image Ix2 (direction towards the position Px2). While not depicted in FIG. 12, the video display 200 may display the image Ix1 and an image indicative of the moving direction of the image Ix1 in the time between the time Tx21 and the time Tx31. More specifically, when the electronic device 100 detected the movement of input operation and notified the video display 200 of the position of the input operation in the time between the Tx2 and the Tx3, the video display 200 may move the image Ix1 or display an arrow indicative of the moving direction of the image Ix1 until the time Tx31 comes and the image Ix2 is displayed.

The video display 200 then displays the screen Sc3, which was displayed on the electronic device 100 at the time Tx3, at time Tx41 that is when the video delay time Td1 elapsed from the time Tx3. At the time Tx41, the video display 200 further displays an image Ix4 (an operation image) corresponding to the position Px2 of the input operation detected by the input operation module 102 at the time Tx3 together with the screen Sc3. At this time, the video display 200 may further display an image Ix5 (an operation image) indicative of the trace of the input operation.

The video display 200 then displays the screen Sc4, which was displayed on the electronic device 100 at the time Tx4, at time Tx51 that is when the video delay time Td1 elapsed from the time Tx4. At the time Tx51, the video display 200 further displays an image Ix6 corresponding to the position Px2 of the input operation detected by the input operation module 102 at the time Tx3 together with the screen Sc4. The image Ix6 is an image corresponding to the screen Sc3 that was displayed on the video display 200 in the past. Accordingly, the display form of the image Ix6 may be indicative of the trace of input operation by, for example, a ripple.

In FIG. 12, the delay time that is the time from a screen is displayed on the electronic device 100 until the screen is displayed on the video display 200 has been explained to be the same (Td1) for any of the screens Sc1 to Sc5. However, there may be a case of the delay time being different for each screen of the screens Sc1 to Sc5. This is because there may be cases where it takes time to encode and decode or where the amount of data becomes large for a screen that displays an intricate image. However, in any case, the video delay time until the respective screens are displayed on the video display is longer than the pointer delay time Td2. The video display 200 can display the image Ix1 subsequent to the pointer delay time Td2 elapsed from the time Tx2. Furthermore, the video display 200 can generate the image Ix1 and such based on a plurality of pieces of input operation data detected by the input operation module 102 at a plurality of points in time prior to the time Tx2 that is when the image Ix1 is displayed. In this case, by the process of interpolation or extrapolation of input operation data (position data) detected at the multiple points in time, the image Ix1 and such can be displayed at a position off the position where the input operation is actually performed. Specifically, when the input operation is swipe (slide) , for example, the video display 200 can display the image Ix1 at a position in an opposite direction of input operation with respect to the start position of the actual input operation. The video display 200 can further display the image Ix6 at a position in the direction of input operation with respect to the end position of the actual input operation. In this case, the video display 200 can display the virtual images Ix1 and Ix6 corresponding to the movement of the input operation Ix2 to Ix5. In the first embodiment, because the image Ix1 and the image Ix6 that are not indicative of actual input operation (not representing the detection result by the input operation module 102) are related to input operation, they are also referred to as operation images.

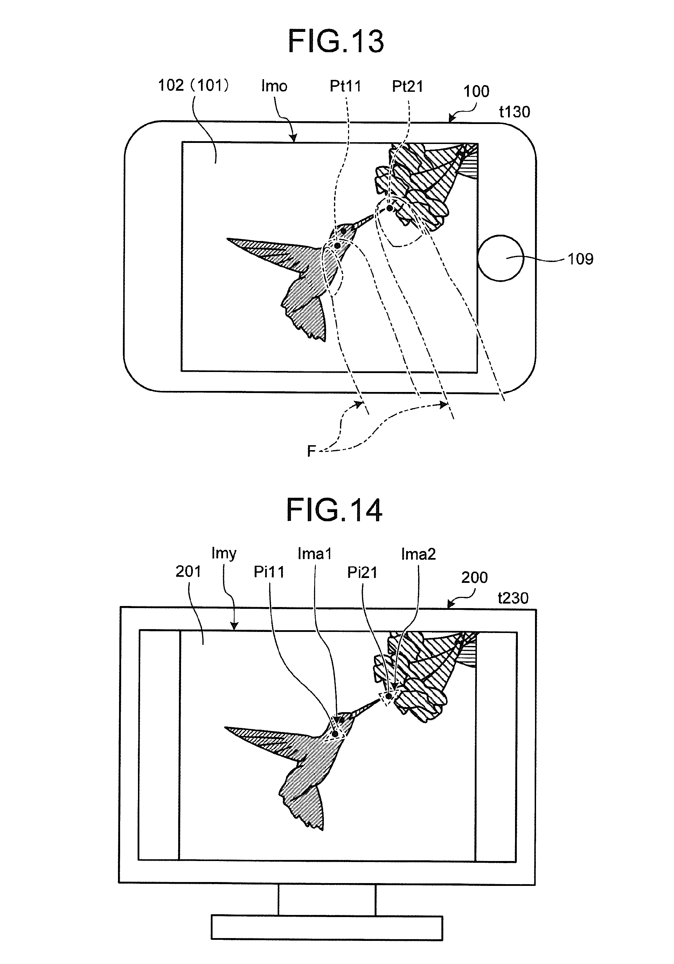

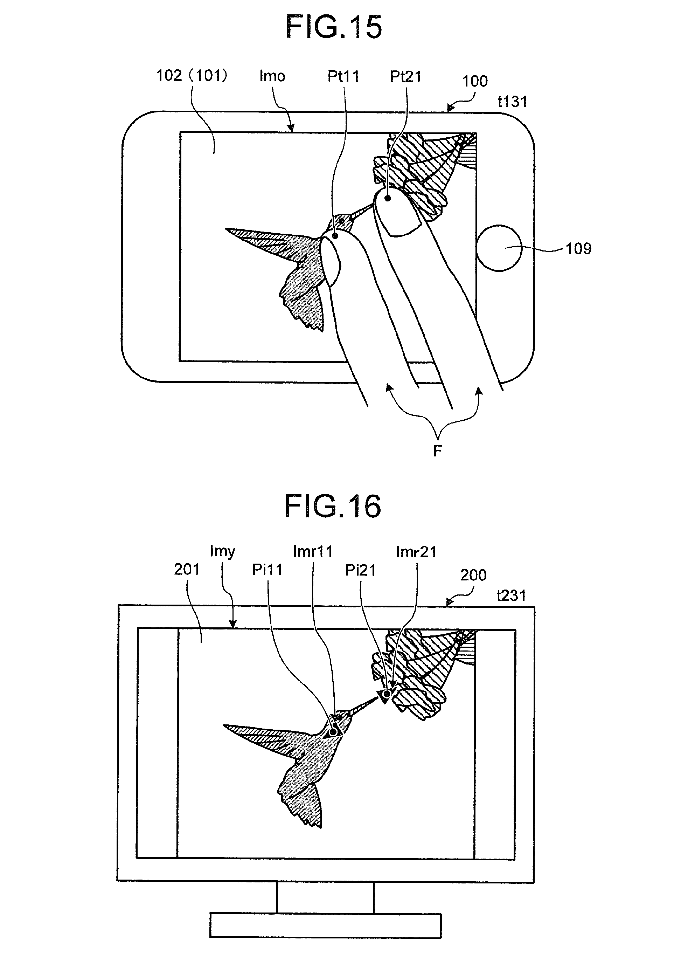

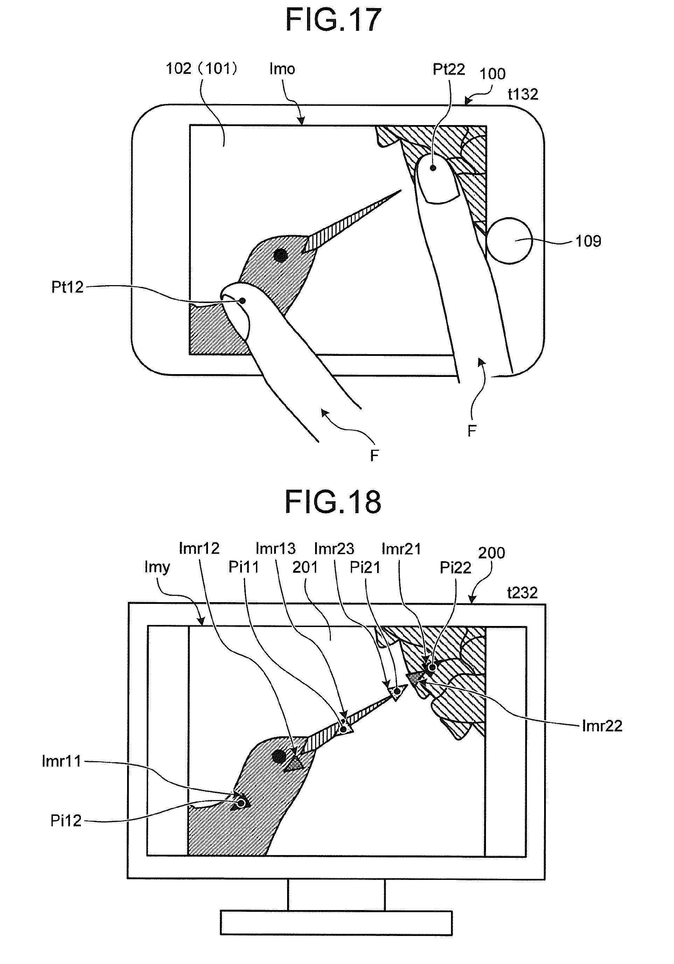

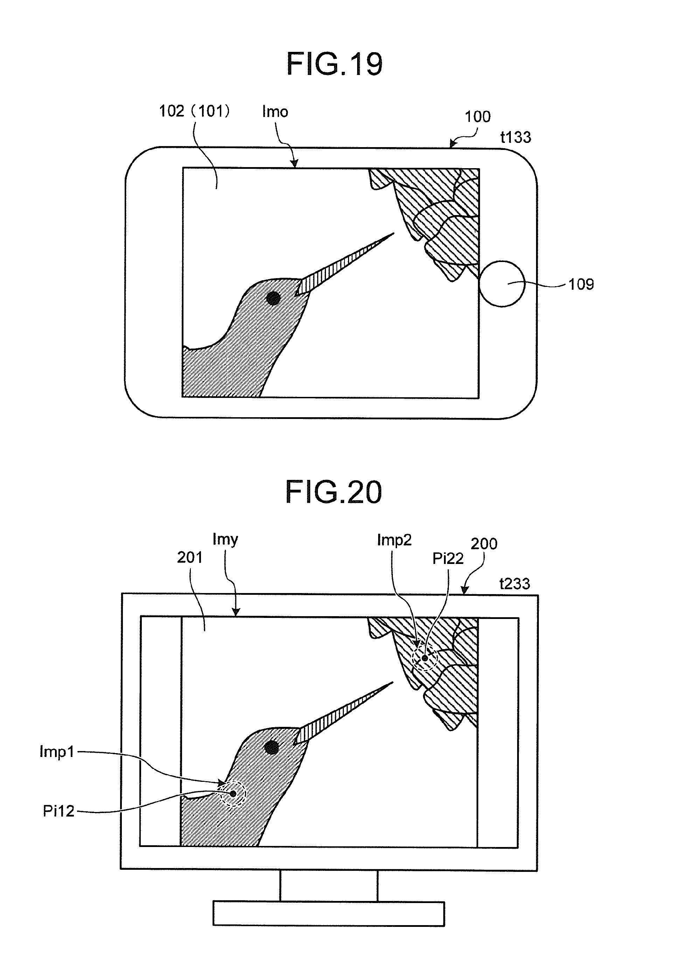

In FIGS. 13 to 20, illustrated are conditions of the display 101 and the display 201 when two of the fingers F are in contact with the input operation module 102 corresponding to the display 101 of the electronic device 100 and are moved to make a space between the two fingers F widen (pinch-out is performed, pinch-open is performed, slide is performed). The screen image Imy corresponding to the screen image Imo displayed on the display 101 at clock time t130 illustrated in FIG. 13 is, as illustrated in FIG. 14, displayed on the display 201 at clock time t230. The screen image Imy corresponding to the screen image Imo on the display 101 at clock time t131 illustrated in FIG. 15 is, as illustrated in FIG. 16, displayed on the display 201 at clock time t231. The screen image Imy corresponding to the screen image Imo on the display 101 at clock time t132 illustrated in FIG. 17 is, as illustrated in FIG. 18, displayed on the display 201 at clock time t232. The screen image Imy corresponding to the screen image Imo on the display 101 at clock time t133 illustrated in FIG. 19 is, as illustrated in FIG. 20, displayed on the display 201 at clock time t233. As can be appreciated by referring to FIGS. 15 to 18, by the input operation performed to the input operation module 102 with the two fingers F, the screen images Imo and Imy are magnified.

In this example, as illustrated in FIGS. 15 and 17, the two fingers F are in contact with the input operation module 102 at the clock time t131 and t132, and the operation images Imr11 to Imr13 and Imr21 to Imr23 corresponding to the input operation performed on the input operation module 102 are, as illustrated in FIGS. 16 and 18, displayed on the display 201 at the clock time t231 and t232, respectively. As can be appreciated from FIGS. 16 and 18, in this example, the operation images Imr11 to Imr13 and Imr21 to Imr23 are formed in a shape having a portion oriented towards a direction to be moved (in the first embodiment, as one example, a triangular shape with one corner (an end portion) oriented towards the direction to be moved). In this example also, the clock time t231 and t232 are later than the clock time t131 and t132, and thus the input operation (position and direction thereof) can be detected in the input operation module 102 at the clock time t131 and t132 before the operation images Imr11 to Imr13 and Imr21 to Imr23 are generated, thereby enabling the directions to be specified for the operation images Imr11 to Imr13 and Imr21 to Imr23. In FIG. 18, the operation image Imr12 is generated by an interpolation process based on the positions Pi11 and Pi12 (Pt11 and Pt12) of the other operation images Imr11 and Imr13 (for example, calculation of an intermediate position therebetween), and the operation image Imr22 is generated by an interpolation process based on the positions Pi21 and Pi22 (Pt21 and Pt22) of the other operation images Imr21 and Imr23 (for example, calculation of an intermediate position therebetween). Accordingly, the various calculations based on the detection result of input operation in the input operation module 102 allow displaying the operation images in a variety of forms.

Likewise, in the display 201, as illustrated in FIG. 13, at the clock time t230 corresponding to the clock time t130 (see FIG. 13) at which time the two fingers F are not yet in contact with the input operation module 102 and at the positions Pi11 and Pi12 corresponding to the positions Pt11 and Pt21 of the two fingers F, the operation images Ima1 and Ima2 that are oriented towards the moving directions of the two fingers F subsequently moved can be displayed. In addition, in the display 201, as illustrated in FIG. 20, at the clock time t233 corresponding to the clock time t133 (see FIG. 19) at which time the two fingers F are moved away from the input operation module 102 and at the positions Pi12 and Pi22 corresponding to the positions Pt12 and Pt22 (see FIG. 17) of the two fingers F at the time the input operation is finished, the operation images Imp1 and Imp2 that are not oriented to any specific directions (in this example, in a circular shape as one example) can be displayed.

As in the foregoing, in accordance with the first embodiment, as one example, using a time difference in image display between the electronic device 100 and the video display 200, the operation images corresponding to the input operation performed on the input operation module 102 can be displayed on the video display 200 in a more effective form.

In the first embodiment, as one example, the screen image Imy and the operation image Imr corresponding to the input operation performed to the input operation module 102 are displayed on the screen 201a of the display 201. Consequently, the user and such is easier to recognize what operation is performed or was performed to the input operation module 102 of the electronic device 100 as the other device.

In the first embodiment, as one example, the image data generator 30b generates the data for the operation image Imr indicative of input operation and the data for the operation image Ima corresponding to the position Pt of the input operation based on the data in response to the input operation (first data) at a point in time before the input operation. Accordingly, in accordance with the first embodiment, as one example, before the screen image Imy displayed on the screen 201a of the display 201 is changed, the screen image Ima that pre-announces the change can be displayed on the screen 201a.

In the first embodiment, as one example, the operation image Imr indicative of input operation and the operation image Ima at a point in time before the input operation is performed are displayed to be different from each other in appearance. Accordingly, as one example, the user and such is easy to distinguish between the operation image Imr based on the actual operation and the virtual operation image Ima. In the first embodiment, as one example, the operation image Ima at a point in time before an input operation is performed is darker than the operation image Imr indicative of the input operation. Accordingly, the operation image Ima at a point in time before the input operation is performed can be expressed as a shadow.

In the first embodiment, as one example, the operation image Ima at a point in time before an input operation is performed has a portion oriented towards the direction of input operation. Consequently, as one example, the user and such is easier to predict in which direction the operation images Ima and Imr will move.

In the first embodiment, as one example, the image data generator 30b generates the data for the operation image Imp at a point in time after the input operation corresponding to the position Pt of the input operation based on the data corresponding to the input operation (first data). Consequently, in accordance with the first embodiment, as one example, the operation image Imr on the screen 201a of the display 201 can be prevented from suddenly disappearing.

In the first embodiment, as one example, the operation image Imr corresponds to the trace of input operation performed on the input operation module 102. Consequently, in accordance with the first embodiment, as one example, the user and such is easier to recognize what operation is performed or was performed to the input operation module 102 of the electronic device 100 as the other device.

### Second Embodiment

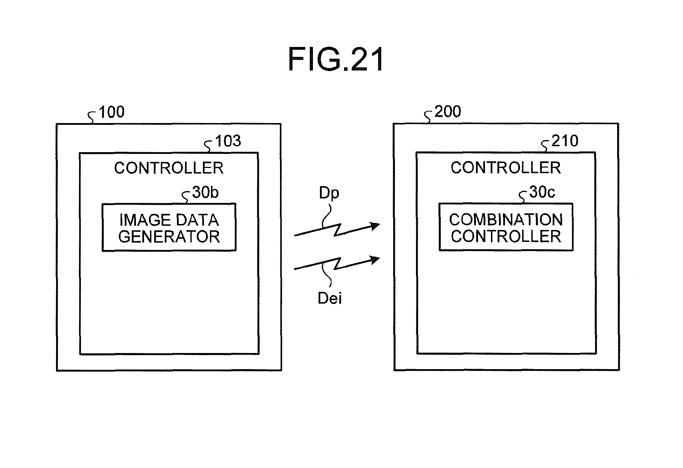

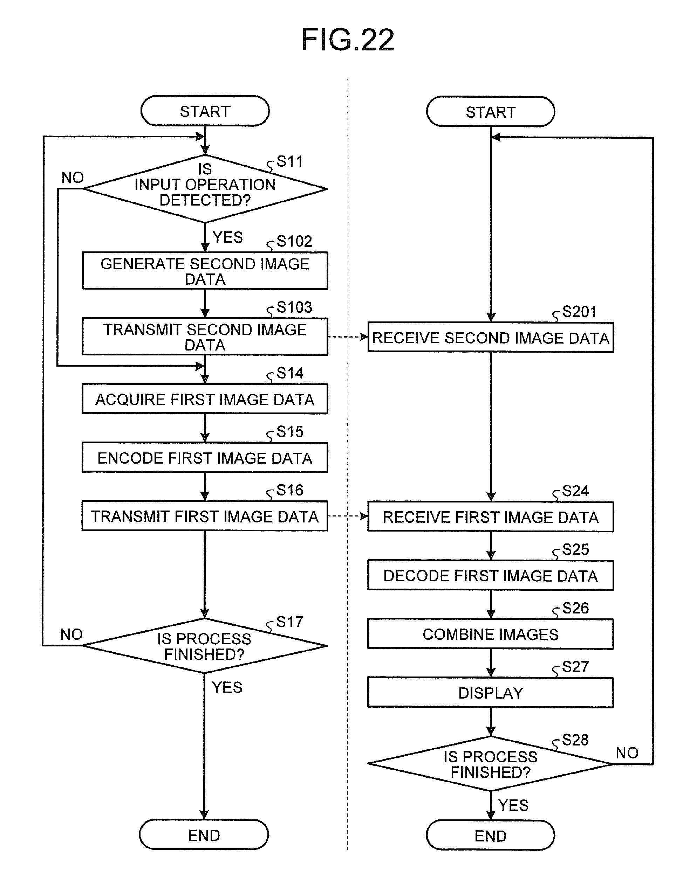

The display forms in the first embodiment can also be achieved by another embodiment. Specifically, in a second embodiment illustrated in FIGS. 21 and 22, the image data generator 30b is provided on the electronic device 100. The image data generator 30b of the electronic device 100 generates the data for the above-described operation images Ima, Imr, and Imp (S102 in FIG. 22), and the communication module 108 of the electronic device 100 transmits the generated data for the operation images Ima, Imr, and Imp to the video display 200 (S103 in FIG. 22). When the communication module 205 of the video display 200 receives the data for the operation images Ima, Imr, and Imp (S201), the combination controller 30c of the video display 200 then combines the data for the screen image Imo and the data for the operation images Ima, Imr, and Imp (S26). The respective modules and specific processes in the respective steps in the second embodiment are the same as those in the first embodiment. Even with such an embodiment, the display forms illustrated in the first embodiment can be achieved.

### Third Embodiment

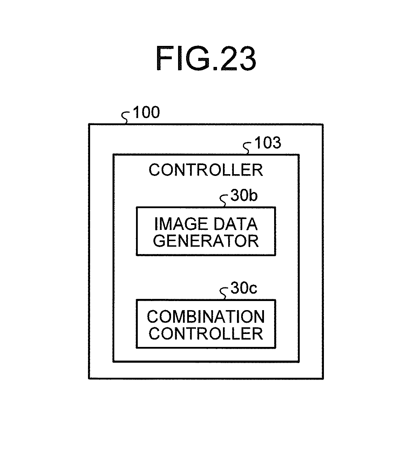

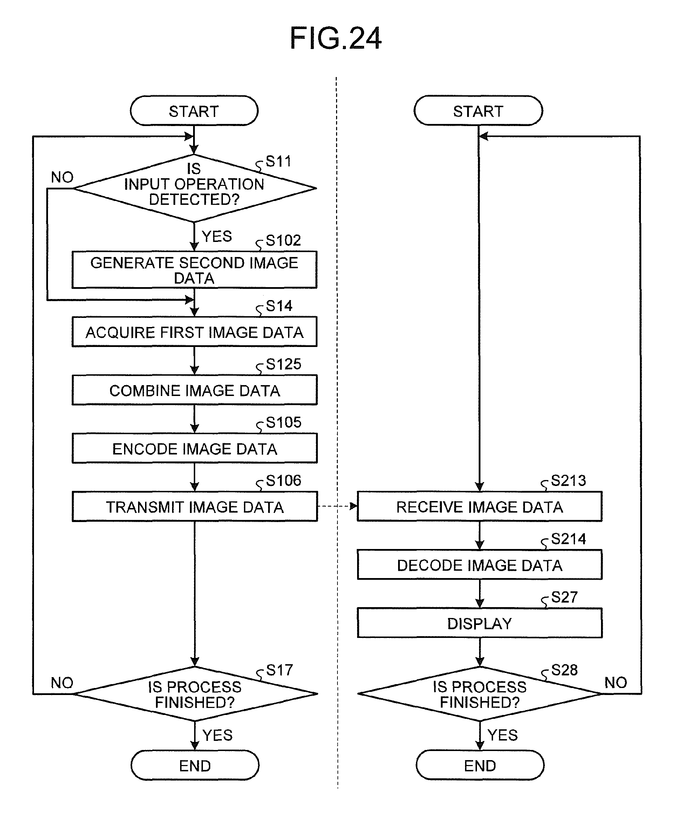

In a third embodiment illustrated in FIGS. 23 and 24, the image data generator 30b and the combination controller 30c are provided on the electronic device 100. The image data generator 30b of the electronic device 100 then generates the above-described operation images Ima, Imr, and Imp (S102 in FIG. 24), and the combination controller 30c of the electronic device 100 combines the data for the screen image Imo and the data for the operation images Ima, Imr, and Imp (S125). The encoder 107 of the electronic device 100 encodes the combined image data (S105), and the communication module 108 of the electronic device 100 transmits the encoded image data (combined image data) (S106). When the communication module 205 of the video display 200 receives the encoded image data (combined image data) (S213), the decoder 208 of the video display 200 decodes the encoded image data (combined image data) (S214). The respective modules and specific processes in the respective steps in the third embodiment are the same as those in the first embodiment and the second embodiment. Even with such an embodiment, the display forms illustrated in the first embodiment can be achieved. However, in the third embodiment, when displaying the screen image Imo at a point in time before an input operation is performed in the input operation module 102, a storage (for example, a buffer, a ring buffer, and an HDD) that temporarily stores therein the image data for a plurality of frames (a plurality of timings, a plurality of sampling timings) is required. At the time an input operation is detected in the input operation module 102, the data for the screen images Imo at points in time before that time is combined with the data for the operation image Ima generated based on the detection result at the detected time.

While the embodiments of the present invention have been described in the foregoing, these embodiments have been presented by way of example only, and are not intended to limit the scope of the invention. These embodiments described herein may be embodied in a variety of other forms, and various omissions, substitutions, combinations, and changes to the embodiments can be made without departing from the spirit of the invention. These embodiments and such modifications would fall within the scope and spirit of the invention and are intended to be covered by the accompanying claims and their equivalents. The specifications of the respective constituent elements can be embodied with appropriate changes.

In the apparatuses (system) according to the above-described embodiments, an input operation performed to the input operation module other than the above-described operation of tap, swipe, and pinch-out (pinch-open), for example, an input operation of double-tap, drag, flick, scroll, two-finger scroll, pinch-in (pinch-close), and touch-and-hold operates in the same way and the same result can be achieved.

Furthermore, the display forms of operation images (position, size, shape, color, density, brightness, design, and others) can be modified in various ways. The operation image in response to an input operation, the operation image at a point in time before the input operation is performed, and the operation image at a point in time after the input operation is performed can be different in at least any of these display forms. The operation images can be the images linked at a plurality of timings. The input operation data transmitted from the first apparatus to the second apparatus can include the data at the starting time and the ending time of the input operation that is different from the sampled clock time.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A display control apparatus (200) comprising:
a first receiver (205) configured to receive encoded data for a screen image from a first transmitter (108) of a first apparatus (100) comprising a first display (101) having a first screen (101a), an encoder (107) configured to encode the data for the screen image displayed on the first screen (101a), the first transmitter (108) configured to transmit the data for the screen image encoded by the encoder (107), an input operation module (102) provided on the first screen (101a) in an overlapping manner, and a second transmitter (108) configured to transmit data in response to an input operation performed on the input operation module (102);
a decoder (208) configured to decode the encoded data for the screen image received by the first receiver (205);
a second receiver (205) configured to receive the data in response to the input operation transmitted from the second transmitter (108);
an image data generator (30b) configured to generate data for an operation image corresponding to the data in response to the input operation received by the second receiver (205); and
a display controller (207, 209, 210) configured to display an image containing the screen image and the operation image on a second screen of a second display from the decoded data for the screen image and the generated data for the operation image, wherein
the display controller (207, 209, 210) is configured to display an image containing a first screen image displayed on the first screen (101a) at a first point in time and a first operation image indicative of the input operation at a second point in time later than the first point in time and to subsequently display an image containing a second screen image displayed on the first screen (101a) at the second point in time and a second operation image indicative of an input operation at the second point in time.

2. The display control apparatus (200) of Claim 1, wherein the display controller (207, 209, 210) is configured to display the first operation image and the second operation image to be different from each other in appearance.

3. The display control apparatus (200) of Claim 2, wherein the first operation image is darker than the second operation image.

4. The display control apparatus (200) of any one of Claims 1 to 3, wherein the first operation image has a portion oriented towards a direction of the input operation.

5. The display control apparatus (200) of Claim 1, wherein the display controller (207, 209, 210) is configured to display an image containing the second screen image displayed on the first screen (101a) at the second point in time, the second operation image, and a third operation image indicative of the input operation at a third point in time later than the second point in time.

6. The display control apparatus (200) of any one of Claims 1 to 5, wherein the image data generator (30b) is configured to generate the data for the operation image corresponding to a trace of the input operation.

7. The display control apparatus (200) of any one of Claims 1 to 6, wherein at least a part of data generation by the image data generator (30b) is performed in parallel with data decoding by the decoder (208).

8. A display control method implemented comprising:
first receiving data for a screen image from a first transmitter (108) of a first apparatus comprising a first display (101) having a first screen (101a), the first transmitter (108) configured to transmit the data for the screen image displayed on the first screen (101a), an input operation module (102) provided on the first screen (101a) in an overlapping manner, and a second transmitter (108) configured to transmit data in response to an input operation performed on the input operation module (102);
second receiving the data in response to the input operation transmitted;
generating data for an operation image corresponding to the data in response to the input operation received; and
displaying an image containing a first screen image displayed on the first screen (101a) at a first point in time and a first operation image corresponding to the data in response to the input operation at a second point in time later than the first point in time and subsequently displaying an image containing a second screen image displayed on the first screen (101a) at the second point in time and a second operation image indicative of an input operation at the second point in time.

9. An electronic device (100) comprising:
an encoder (107) configured to encode data for a screen image displayed on a first screen (101a) of a first display (101);
a first transmitter (108) configured to transmit the data for the screen image encoded by the encoder (107);
an image data generator (30b) configured to generate data for an operation image corresponding to data in response to an input operation performed on an input operation module (102) provided on the first screen (101a) in an overlapping manner, the data for the operation image being displayed on a screen of another device; and
a second transmitter (108) configured to transmit the data for the operation image generated by the image data generator (30b), wherein
the image data generator (30b) is configured to generate data for a first operation image displayed in a superposed manner on a first screen image displayed on the first screen (101a) at a first point in time, the first operation image being indicative of an input operation at a second point in time later than the first point in time, and to generate data for a second operation image displayed in a superposed manner on a second screen image displayed on the first screen (101a) at the second point in time, the second operation image being indicative of an input operation at the second point in time.

10. A control method for an electronic device (100), the control method comprising:
encoding data for a screen image displayed on a first screen (101a) of a first display (101);
first transmitting the data for the screen image encoded;
generating data for an operation image corresponding to data in response to an input operation performed on an input operation module (102) provided on the first screen (101a) in an overlapping manner, the data for the operation image being displayed on a screen of another device; and
second transmitting the data for the operation image generated, wherein
the generating includes generating data for a first operation image displayed in a superposed manner on a first screen image displayed on the first screen (101a) at a first point in time, the first operation image being indicative of an input operation at a second point in time later than the first point in time, and data for a second operation image displayed in a superposed manner on a second screen image displayed on the first screen (101a) at the second point in time, the second operation image being indicative of an input operation at the second point in time, as the data for the operation image.
